(19) Europäisches Patentamt
European Patent Office
Office européen des brevets

(11) **EP 3 535 653 B1**

(12) **EUROPEAN PATENT SPECIFICATION**

(45) Date of publication and mention
of the grant of the patent:
**30.11.2022 Bulletin 2022/48**

(21) Application number: **17745211.7**

(22) Date of filing: **07.07.2017**

(51) International Patent Classification (IPC):
**G06F 7/72** $^{(2006.01)}$

(52) Cooperative Patent Classification (CPC):
**G06F 7/72;** G06F 2207/7204

(86) International application number:
**PCT/SG2017/050345**

(87) International publication number:
**WO 2018/097797 (31.05.2018 Gazette 2018/22)**

(54) **METHOD AND SYSTEM FOR DERIVING DETERMINISTIC PRIME NUMBER**

VERFAHREN UND SYSTEM ZUR ABLEITUNG EINER DETERMINISTISCHEN PRIMZAHL

PROCÉDÉ ET SYSTÈME DE DÉDUCTION D'UN NOMBRE PREMIER DÉTERMINISTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2016 SG 10201609975T**

(43) Date of publication of application:
**11.09.2019 Bulletin 2019/37**

(73) Proprietor: **Huawei International Pte. Ltd.**
**Singapore 486066 (SG)**

(72) Inventors:
• **WU, Shuang**
**Shenzhen, Guangdong**
**518129 (CN)**
• **SOVIO, Sampo**
**11120 Riihimäki (FI)**
• **WANG, Xiaopu**
**Beijing 100095 (CN)**

(74) Representative: **Epping - Hermann - Fischer**
**Patentanwaltsgesellschaft mbH**
**Schloßschmidstraße 5**
**80639 München (DE)**

(56) References cited:
**WO-A2-2015/132524 US-A1- 2002 186 837**

• **CHRISTOPHE CLAVIER ET AL: "Generating
Provable Primes Efficiently on Embedded
Devices", 21 May 2012 (2012-05-21), NETWORK
AND PARALLEL COMPUTING; [LECTURE
NOTES IN COMPUTER SCIENCE; LECT.NOTES
COMPUTER], SPRINGER INTERNATIONAL
PUBLISHING, CHAM, PAGE(S) 372 - 389,
XP047004403, ISSN: 0302-9743 ISBN:
978-3-642-17571-8 paragraph [0002]**
• **SHIJUN ZHAO ET AL: "Providing Root of Trust
for ARM TrustZone using SRAM PUFs", IACR,
INTERNATIONAL ASSOCIATION FOR
CRYPTOLOGIC RESEARCH, vol.
20140625:034646, 16 June 2014 (2014-06-16),
pages 1-12, XP061016293, [retrieved on
2014-06-16]**

## Description

## Field of the Invention

This disclosure relates to a method and system for obtaining two prime numbers for generating a pair of keys. Particularly, the disclosure relates to a method and system implementing a deterministic derivation function to obtain prime numbers.

## Summary of the Prior Art

Public-key cryptography is the most important tool for secure communications on internet, especially for security of online payment.

The FIDO Alliance was formed in the summer of 2012, with PayPal, Lenovo, Nok Nok Labs, Validity Sensors, Infineon, and Agnitio as the founding companies, dedicated to working on a passwordless authentication protocol. This passwordless protocol allows easier and faster method for making payment online. The authentication procedure of this protocol consists of two parts, namely, fingerprint verification and device certificate verification, which requires that each smart phone has its own private key and certificate for its public-key. In China, a similar alliance called IFAA was founded by Ant Financial, Samsung, Huawei, ZTE, OPPO and Cool-Pad etc., which develops standards for fingerprint verification and device certificate verification.

The use of private key and public key enables secure transmission of data containing confidential information. There are various algorithms that use private and public keys and each algorithm may have different implementations. The most widely used asymmetric cryptographic algorithm is the one developed by Ron Rivest, Adi Shamir and Leonard Adelman (RSA). The RSA algorithm creates a pair of keys, namely, public key and private key. There are two ways of using an asymmetric key algorithm, namely, encryption and digital signature. Some algorithm can only do one of the two implementations. However, the RSA algorithm is capable of providing both implementations.

When an asymmetric-key algorithm is used for encryption, the public key is for encrypting data and the private key is used for decrypting data. Everyone can encrypt data using the public key but only the owner of the private key can decrypt the data.

When the asymmetric-key algorithm is used for digital signature, the private key is used for signing the message and the public key is used for verifying the signature. Everyone can verify the digital signature but only the owner of the private key can sign new messages.

The mathematical description of the key generation of RSA algorithm is as follows:

    1. Two big prime numbers P and Q are chosen randomly such that the binary expressions of them are of the same length (For RSA-2048, the bit-sizes of P and Q are chosen as 1024 bit).
    2. Compute the product of P and Q as the modulus $N = PQ$.
    3. Compute the value of $\varphi(N) = (P - 1)(Q - 1)$.
    4. Choose the parameter e of the public key such that $GCD(e, \varphi(N)) = 1$, where $GCD(x,y)$ stands for the greatest common divisor of integer $x$ and y.
    5. Find d such that $ed \equiv 1\ mod\ \varphi(N)$. Equivalently, $ed = k \cdot \varphi(N) + 1$ for some integer k.
    6. (*e, N*) is the public key *pk* and (*d, N*) is the private key (secret key) *sk*.

The mathematical description of the encryption and decryption of RSA algorithm is as follows:

    1. Alice wants to send some secret information, noted as plaintext m to Bob.
    2. Alice encrypts the plaintext m using Bob's public key $pk_{Bob} = (e,N) : c = Enc(pk_{Bob},m) \equiv m^e mod\ N$ and send *c* to Bob through certain unsecured channel;
    3. After receiving ciphertext *c*, Bob use his own private key $sk_{B0b} = (d,N)$ to decrypt the ciphertext and get the secret information plaintext m = $Dec(sk_{Bob},c) = c^d\ mod\ N$.

        ▪ Euler's Theorem: $a^{\varphi}(N) \equiv 1\ mod\ N$ for all *a* and *N* such that *a* and *N* are co-prime ($GCD(a,N) = 1$).
        ▪ According to Euler's Theorem, $c^d \equiv (m^e)^d \equiv m^{ed} \equiv m^{k \cdot \varphi(N)+1} \equiv m\ mod\ N$, the *Dec(sk, c)* function will always return the correct plaintext m.

The mathematical description of signing messages using digital signature via the RSA algorithm is as follows:

    1. Bob signs a message m using his private key $sk_{Bob} = (d,N)$: For message m, calculate the hash digest as $h = Hash(m)$. Then calculate the signature using private key: $sig = h^d\ mod\ N$;
    2. Bob publishes message together with the signature (*m,sig*).
    3. Alice receives (*m,sig*) and wants to verify if the signature is from Bob.
    4. Alice obtains Bob's public key $pk_{Bob} = (e,N)$ from the Certificate Authority (CA).
    5. Alice calculate the hash digest of the message as $h = Hash(m)$ and decrypt the *sig* value and get $h' = sig^e\ mod\ N$.
    6. Alice compares *h* and *h'* to see if they are equal or not. If $h = h'$, the signature from Bob is successfully verified.

In key generation of RSA algorithm, P and *Q* are tested to affirm that both are prime numbers. The Miller-Rabin primality test or Rabin-Miller primality test is a primality test using an algorithm which determines whether a given number is prime, similar to the Fermat primality test and the Solovay-Strassen primality test. The original version, due to Gary L. Miller, is deterministic, but the determinism relies on the unproven Extended Riemann hypothesis, and Michael O. Rabin modified it to obtain an unconditional probabilistic algorithm. The Rabin-Miller primality test can be described as follows:

Step 1. Given odd number y.
Step 2. Find biggest integer s such that $y - 1 = 2^s \cdot v$, where $s$ and $v$ are positive integers and $t$ is odd.
Step 3. Generate random $a$ which is in a range of $[2, y - 2]$.
Step 4. If $a^v \not\equiv 1 \bmod y$ and $a^{2^r v} \not\equiv -1 \bmod y$ for all $0 \leq r \leq s - 1$, y is a composite number.
Step 5. Repeat step 3 to step 4 for a couple of times, if no judgment that y is composite is given, output y as a probabilistic prime number.

Rabin-Miller primality test is probabilistic, which means if y is prime, it will never be determined as composite; if y is composite, there is a small chance that it will be determined as prime number. As observed, by repeating the above test with different choices of random $a$ in step 3, the chance that a composite number be determined as prime will be decreased exponentially.

It is note that the RSA key pair is stored on separate hardware storage. Such secure hardware storage increases the cost of the mobile device and limits the use of space within the enclosure of a mobile device. Hence, those skilled in the art are striving to improve the storage of RSA key pair.

WO2015/132524A2 discloses generation of a message m of order $\lambda$ (n) for a test of the integrity of generation of a pair of cryptographic keys within the multiplicative group of integers modulo n = p.q, comprising : - generation of the key pair including, to generate p and q : o a random selection of candidate integers, and o a primality test, - a first search of the multiplicative group of integers modulo p for a generator, a, - a second search of the multiplicative group of integers modulo q for a generator, b, - a third search for a number y, as a message m, verifying : $1 \leq \gamma \leq n - 1$ where $\gamma$ =a mod p and $\gamma$ =b mod q, the first or second search being performed at the time of said primality test.

US2002/186837A1 discloses a process of searching in parallel for a plurality of prime number values simultaneously includes the steps of : randomly generating a plurality of k random odd numbers (wherein k is preferably more than 2, but could also be one or more) expressed as n0, 0, n1, 0, ... n((k?1)), 0, each number providing a prime number candidate; determining a plurality of y additional odd numbers based on each one of the randomly generated odd numbers n0, 0, n1, 0, ... n(k?1), 0 to provide additional prime number candidates thereby yielding a total number of prime number candidates; sieving the total number of prime number candidates by performing a small divisor test on each of the candidates in order to eliminate candidates revealed to be composite numbers by the small divisor test thereby yielding a sieved number s of candidates; and performing a first probabilistic primality test on each of the sieved number s of candidates, each of the plurality of s first primality tests including an associated exponentiation operation executed by an associated one of a plurality of s of the exponentiation units, the exponentiation operations being performed by the plurality of s exponentiation units substantially simultaneously in order to eliminate candidates revealed to be composite numbers by the primality test thereby yielding a remaining number r of candidates.

Christophe Clavier et al.: "Generating Provable Prime Efficiently on Embedded Devices", NETWORK AND PARALLEL COMPUTING, SPRINGER INTERNATIONAL PUBLISHING PAGES 372-389, ISSN: 0302-9743, ISBN: 978-3-642-17571-8 disclosegenerating provable prime numbers efficiently on embedded devices such as smartcards, based on variants of Pocklington's and the Brillhart-Lehmer-Selfridge-Tuckerman-Wagstaff theorems.

## Summary of the Invention

The above and other problems are solved and an advance in the art is made by systems and methods provided by embodiments in accordance with the invention. A first advantage of embodiments of systems and methods in accordance with the invention is that the systems and methods are based on a deterministic derivation function that takes a seed value and a given bit length to outputs a prime number with the given bit length. A second advantage of embodiments of systems and methods in accordance with the invention is that the prime number generated is based on a deterministic derivation function, the prime numbers can be recovered. Hence, simplifying provisioning and management of device certificates. A third advantage of embodiments of systems and methods in accordance with the invention is that systems and methods is software implemented. Hence, this can be easily implemented on existing devices.

The above advantages are provided by embodiments of a system and a method of generating prime numbers as defined in the claims. The system comprises a pseudorandom number generator (PRNG) module and a prime number generator (PNG) module. The PRNG module is configured to: receive a request from the PNG module, the request containing a bit length of the pseudorandom number required; generate the required bit length of pseudorandom number; transmit a response containing the generated bit length of pseudorandom numbers to the PNG module. The PNG module is configured to: transmit the request containing the bit length of the pseudorandom numbers required; receive the response from the PRNG module; assign the pseudorandom numbers in the response to form raw data *PPP*; set a least significant bit (LSB) and most significant bit (MSB) of *PPP* as 1 to obtain a first odd number denoted as PP;

and execute an algorithm to determine a first big prime number starting from odd number PP.

In accordance with an aspect of this disclosure, the PRNG module comprises a PRNG to generate the required bit length of pseudorandom number, the PRNG takes an input seed value from a root key from a source and a given bit length. In accordance with an aspect of this disclosure, the root key is obtained from a device hardware unique key and the given bit length is 1024 bits.

In accordance with an aspect of this disclosure, the step to execute the algorithm to determine the first prime number starting from odd number PP comprises the PNG module to: calculate a product of m number of small prime number, $prod = \prod_{i=0}^{m-1} p_i$ , where $p_i$ is the $i$-th smallest prime number; initialise a first counter, $d1$, and a second counter, $d2$, as zero; calculate the greatest common divisor of $x$ and $prod$, where $x$ is $PP$, with the following function, $t = GCD(x,prod)$; determine if $t = 1$; execute Rabin-Miller primality test on $x$ in response to $t = 1$; determine $x$ as the first prime number in response to $x$ passing the Rabin-Miller primality test; and storing $d1$ and $d2$ in a memory.

In accordance with an aspect of this disclosure, the step to execute the algorithm to determine the first prime number starting from odd number PP further comprises the PNG module to: set Next function, $x = Next(x,step1)$ and $d1 = d1 + 1$ and repeat from the step to calculate the greatest common divisor of $x$ and $prod$ in response to $t \neq 1$. In accordance with an embodiment of this embodiment, the Next function, $x = Next(x,step1)$ is one of addition ($PP = PP + step1$), XOR ($PP = PP \oplus step1$) and modular addition ($PP = PP + step1\ mod\ N$). Further, the $step1$ is 2.

In accordance with an aspect of this disclosure, the step to execute the algorithm to determine the first prime number starting from odd number PP further comprises the PNG module to: update $x = x + prod$ and $d2 = d2 + 1$ and repeat the Rabin-Miller primality test on $x$ in response to $x$ failing the Rabin-Miller primality test.

In accordance with an embodiment of this disclosure, the step to execute the Rabin-Miller primality test comprises the PNG module to: determine a biggest integer $s$ such that $x - 1 = 2^s \cdot v$, where $v$ is a positive odd integer; transmit another request to the PRNG module containing a bit length of the pseudorandom numbers required; receive the required pseudorandom number from the PRNG module; assign the required pseudorandom numbers to form a first random number $a'$; select a second random number $a$ within a range of 2 and $x$ - 2. In accordance with an aspect of this embodiment, the second random number $a$ is selected with the following expression, $a = 2 + (a'mod\ (x - 3))$. In accordance with an embodiment of this embodiment, the step to determine if $x$ is a composite number comprises the PNG module to: determine x is a composite number if $a^v \neq 1\ mod\ x$ and $a^{2rv} \neq -1\ mod\ x$ for all $0 \leq r \leq s$ - 1.

In accordance with an aspect of this disclosure, the PNG module is further configured to recover the first prime number in the following manner. The PNG module retrieves d1 and d2 from the memory and determines the first prime number, P, with the following expression, $P = PP + (step1 \times d1) + (prod \times d2)$.

In accordance with an aspect of this disclosure, the step to execute the algorithm to determine the first prime number starting from odd number PP comprises the PNG module to: calculate $rx_i \equiv x\ mod\ p_i\ for\ 0 \leq i < m$ , where $p_i$ is the $i$-th smallest prime number, $rx_i$ is a single-precision word and $x = PP$; initialise a counter, $d$, as zero; determine if $rx_i + 2d$ can be divided by any $p_i$ for $0 \leq i < m$; execute Rabin-Miller primality test on $x + 2d$ in response to $rx_i + 2d$ being not dividable by all $p_i$, for $0 \leq i < m$; determine $x + 2d$ as the first prime number in response to $x + 2d$ passing the Rabin-Miller primality test; and storing $d$ in a memory.

In accordance with an aspect of this disclosure, the step to execute the algorithm to determine the first prime number starting from odd number PP further comprises the PNG module to: set d = $d$ + 1 and repeat from the step to determine if $rx_i + 2d$ can be divided by $p_i$ in response to $rx_i + 2d$ being dividable by any $p_i$ for $0 \leq i < m$.

In accordance with an aspect of this disclosure, the step to execute the algorithm to determine the first prime number starting from odd number PP further comprises the PNG module to: update d = $d$ + 1 and repeat from the step to determine if $rx_i + 2d$ can be divided by $p_i$ in response to $x + 2d$ failing the Rabin-Miller primality test.

In accordance with an aspect of this disclosure, the step to execute the Rabin-Miller primality test comprises the PNG module to: determine a biggest integer $s$ such that $(x + 2d) - 1 = 2^s \cdot v$, where $v$ is a positive odd integer; transmit another request to the PRNG module containing a bit length of the pseudorandom numbers required; receive the required pseudorandom number from the PRNG module; assign the required pseudorandom numbers to form a first random number $a'$; select a second random number $a$ within a range of 2 and $(x + 2d)$ - 2. In accordance with an aspect of this aspect the second random number $a$ is selected with the following expression, $a = 2 + (a'mod\ (x + 2d - 3))$. In accordance with an aspect of this aspect, the step to determine if $x + 2d$ is a composite number comprises the PNG module to: determine $x + 2d$ is a composite number if $a^v \neq 1\ mod\ (x + 2d)$ and $a^{2rv} \neq -1\ mod\ (x + 2d)$ for all $0 \leq r \leq s$ - 1.

In accordance with an aspect of this disclosure, the PNG module is further configured to recover the first prime number in the following manner. The PNG module retrieves d from the memory and determines the first prime number, P, with the following expression, P = $PP$ + (2 × d).

In accordance with an aspect of this disclosure, the PNG module is further configured to: assign the pseudorandom numbers in the response to form another raw data $QQQ$; set a least significant bit (LSB) and most significant bit (MSB) of $QQQ$ as 1 to obtain a second odd number denoted as *QQ*; and execute the algorithm to determine a second big prime number starting from the second odd number *QQ*.

In accordance with another aspect of the disclosure, a method for generating a prime number between a pseudorandom number generator (PRNG) module and a prime number generator (PNG) module is provided in the following manner. The method comprises: the prime number generator (PNG) module to: receiving a request from the PNG module, the request containing a bit length of the pseudorandom number required; generating the required bit length of pseudorandom number; transmitting a response containing the generated bit length of pseudorandom numbers to the PNG module; and the PNG module to: transmitting the request containing the bit length of the pseudorandom numbers required; receiving the response from the PRNG module; assigning the pseudorandom numbers in the response to form raw data *PPP*; setting a least significant bit (LSB) and most significant bit (MSB) of *PPP* as 1 to obtain a first big odd number denoted as *PP*; and executing an algorithm to determine a first big prime number starting from odd number *PP*.

In accordance with an aspect of this disclosure, the PRNG generates the required bit length of pseudorandom number based on an input seed value from a root key from a source and a given bit length. In accordance with an embodiment of this embodiment, the root key is obtained from a device hardware unique key and the given bit length is 1024 bits.

In accordance with an aspect of this disclosure, the step of executing the algorithm to determine the first prime number starting from odd number PP comprises: calculating a product of m number of small prime number,

$$prod = \prod_{i=0}^{m-1} p_i$$

, where $p_i$ is the *i*-th smallest prime number; initialising a first counter, *d1,* and a second counter, *d2*, as zero; calculating the greatest common divisor of *x and prod,* where *x* is *PP,* with the following function, *t* = *GCD*(*x,prod*); determining if *t* = 1; executing Rabin-Miller primality test on *x* in response to *t* = 1; determining *x* as the first prime number in response to *x* passing the Rabin-Miller primality test; and storing *d1* and *d2* in a memory.

In accordance with an aspect of this disclosure, the step of executing the algorithm to determine the first prime number starting from odd number PP further comprises: setting Next function, *x* = *Next*(*x,step*1) and *d*1 = *d*1 + 1 and repeats from the step of calculating the greatest common divisor of *x and prod* in response to *t* ≠ 1. In accordance with an aspect of this aspect, the Next function, *x* = *Next*(*x,step*1) is one of addition (*PP* = *PP* + *step*1), XOR (*PP* = *PP* ⊕ *step*1) and modular addition (*PP* ≡ *PP* + *step*1 *mod N*). Preferably, *step1* is 2.

In accordance with an embodiment of this disclosure, the step of executing the algorithm to determine the first prime number starting from odd number PP further comprises: updating *x* = *x* + *prod* and *d*2 = *d*2 + 1 and repeating the Rabin-Miller primality test on *x* in response to *x* failing the Rabin-Miller primality test.

In accordance with an embodiment of this disclosure, the step of executing the Rabin-Miller primality test comprises: determining a biggest integer s such that $x - 1 = 2^s \cdot v$, where *v* is a positive odd integer; transmitting another request to the PRNG module containing a bit length of the pseudorandom numbers required; receiving the required pseudorandom number from the PRNG module; assigning the required pseudorandom numbers to form a first random number *a'*; selecting a second random number *a* within a range of 2 and *x* - 2. In accordance with an aspect of this embodiment, the second random number *a* is selected with the following expression, *a* = 2 + (*a'mod (x* - 3)). In accordance with an embodiment of this embodiment, the step of determining if x is a composite number comprises: determining x is a composite number if $a^v \not\equiv 1 \bmod x$ and $a^{2^r v} \not\equiv -1 \bmod x$ for all $0 \le r \le s - 1$.

In accordance with an aspect of this disclosure, the PNG module is configured to recovering the first prime number in the following manner. The method retrieves *d1* and *d2* from the memory and determines the first prime number, *P*, with the following expression, *P* = *PP* + (*step*1 × *d*1) + (*prod* × *d*2).

In accordance with an aspect of this disclosure, the step of executing the algorithm to determine the first prime number starting from odd number PP comprises: calculating $rx_i \equiv x \bmod p_i$ for $0 \le i$ < m, where $p_i$ is the *i*-th smallest prime number, $rx_i$ is a single-precision word and x=PP; initialising a counter, *d*, as zero; determining if $rx_i$ + 2d can be divided by any $p_i$ for $0 \le i$ < m; executing Rabin-Miller primality test on *x* + 2d in response to $rx_i$ + 2d not being dividable by all $p_i$ for $0 \le i$ < m; determining *x* + 2d as the first prime number in response to *x* + 2d passing the Rabin-Miller primality test; and storing *d* in a memory.

In accordance with an aspect of this disclosure, the step of executing the algorithm to determine the first prime number starting from odd number PP further comprises:

setting *d* = *d* + 1 and repeating from the step of determining if $rx_i$ + 2d can be divided by $p_i$ in response to $rx_i$ + 2d being dividable by any $p_i$ for $0 \le i$ < m.

In accordance with an aspect of this disclosure, the step of executing the algorithm to determine the first prime number starting from odd number PP further comprises: updating *d* = *d* + 1 and repeating from the step of determining if $rx_i$ + 2d can be divided by $p_i$ in response to *x* + 2d failing the Rabin-Miller primality test.

In accordance with an aspect of this disclosure, the step of executing the Rabin-Miller primality test comprises: determining a biggest integer s such that (*x* + 2d) - 1 = $2^s \cdot v$, where *v* is a positive odd integer; transmitting another request to the PRNG module containing a bit length of the pseudorandom numbers required; receiving the required pseudorandom number from the PRNG module; assigning the required pseudorandom numbers to form a first random number *a'*; selecting a second random number *a* within a range of 2 and (*x + 2d*) - 2. In accordance with an aspect of this aspect, the second random number *a* is selected with the following expression, *a = 2 + (a'mod (x + 2d) - 3))*. In accordance with an embodiment of this aspect the step of determining if *x + 2d* is a composite number comprises: determining *x + 2d* is a composite number if $a^v \not\equiv 1\ mod\ (x + 2d)$ and $a^{2rv} \not\equiv -1\ mod\ (x + 2d)$ for all $0 \leq r \leq s$ - 1.

In accordance with an aspect of this disclosure, the method further comprises the PNG module to recovering the first prime number in the following manner. The method retrieves d from the memory and determines the first prime number, P, with the following expression, P = *PP* + (2 × d).

In accordance with an aspect of this disclosure, the method further comprises the PNG module to: assigning the pseudorandom numbers in the response to form another raw data *QQQ*; setting a least significant bit (LSB) and most significant bit (MSB) of *QQQ* as 1 to obtain a second odd number denoted as *QQ*; and executing the algorithm to determine a second big prime number starting from the second odd number *QQ*.

## Brief Description of the Drawings

The above advantages and features in accordance with this invention are described in the following detailed description and are shown in the following drawings:

Figure 1 illustrating a system 100 for performing the proposed algorithm to determine prime numbers in accordance with this disclosure;

Figure 2 illustrating a timing diagram 100 of the information flow between the pseudorandom number generator module and a prime number generator module in accordance with this disclosure;

Figure 3 illustrating a process 300 performed by a pseudorandom number generator module to generate and transmit pseudorandom number in accordance with this disclosure;

Figure 4 illustrating an example of a pseudorandom number generator for generating pseudorandom numbers in accordance with this disclosure;

Figure 5 illustrating a process 500 performed by the prime number generator module for determining a prime number in accordance with this disclosure;

Figure 6 illustrating a first process 600 performed by the prime number generator module executing a first algorithm to determine the first prime number starting from odd number *PP* in accordance with this disclosure;

Figure 7 illustrating a first process 700 performed by the prime number generator module executing a second algorithm to determine the first prime number starting from odd number *PP* in accordance with this disclosure;

Figure 8 illustrating a process 800 performed by the PNG module 140 executing the Rabin-Miller primality test in accordance with this disclosure;

Figure 9 illustrating an overall process 900 for generating and recovering the two prime numbers for generating a RSA key pairs in accordance with this disclosure;

Figure 10 illustrating an example of an application of system 100 in accordance with this disclosure.

## Detailed Description

This disclosure relates to a method and system for obtaining two prime numbers for generating a pair of keys. Particularly, the disclosure relates to a method and system implementing a deterministic derivation function to obtain prime numbers.

In this disclosure, it is proposed that the algorithm to be implemented is a deterministic derivation function that takes a seed value (usually a root key of 256 bits) and a given bit length, and outputs a prime number with the given bit length. When the same input values are provided to this algorithm, the output prime number is required to be always the same. The proposed algorithm consists of two parts:

First, the primes are generated from RK, where deterministic procedure is used to find primes and fast recovery information. The fast recovery information is offset value allowing quick recovery.

Secondly, primes are recovered by using RK and recovery information. This may happen in different device during the first part. For example powerful server may pre-compute fast recovery values for P and Q. Devices with less computation power can quickly recover P and Q from recovery values.

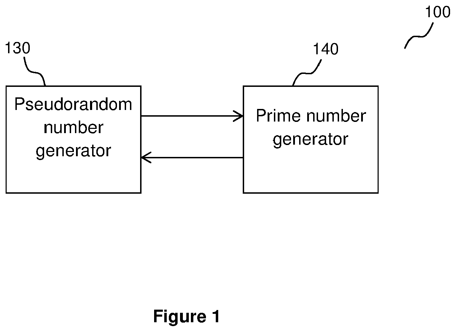

Figure 1 illustrates a system 100 for performing the proposed algorithm. The system 100 comprises a pseudorandom number generator (PRNG) module 130 and a prime number generator (PNG) module 140. In operation, the PNG module 140 sends a request for required bit length of pseudorandom number to the PRNG module 130. In response to the request, the PRNG module 130 generates pseudorandom number and sends the required bit length of pseudorandom number to the PNG module 130. Upon receipt of the pseudorandom number, the PNG module 140 executes an algorithm to determine 2 large prime numbers, namely, P and Q. The use of two separate modules is such that the actual process of generating the pseudorandom number by the PRNG module 130 is not known to the PNG module 140. Further details of the processes performed by the PRNG module 130 and PNG module 140 would be described below.

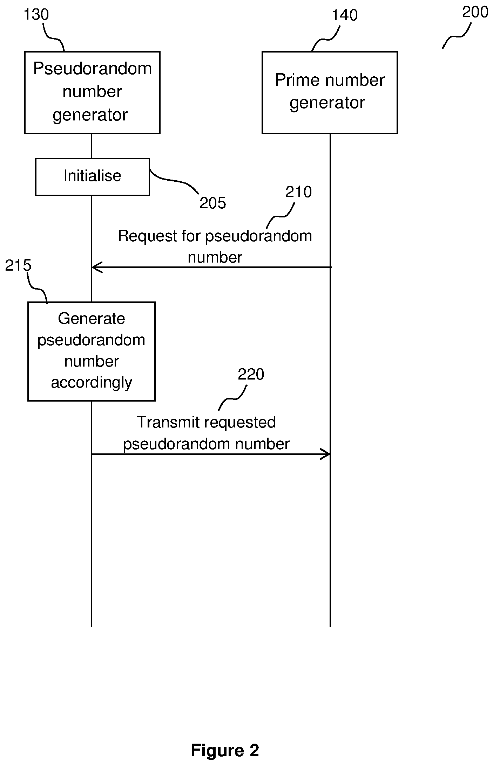

Figure 2 illustrates a timing diagram 200 of the information flow between the PRNG module 130 and the PNG module 140. Timing diagram 200 begins with step 205 where the PRNG module 130 initialises.

In step 210, the PNG module 140 generates and transmits a request for bit length of pseudorandom number to the PRNG module 130. In response to receiving the request, the PRNG module 130 generates the required bit length of pseudorandom number in step 215.

In step 220, the PRNG module 130 transmits the requested bit length of pseudorandom number to the prime number generator module 140. In response to receiving the requested bit length of pseudorandom number, the PNG module 140 generates the prime numbers. Steps 210, 215 and 220 are repeated as and when the PNG module 140 request for pseudorandom number. Further details of the processes performed by each of the PRNG module 130 and PNG module 140 would be described as follows.

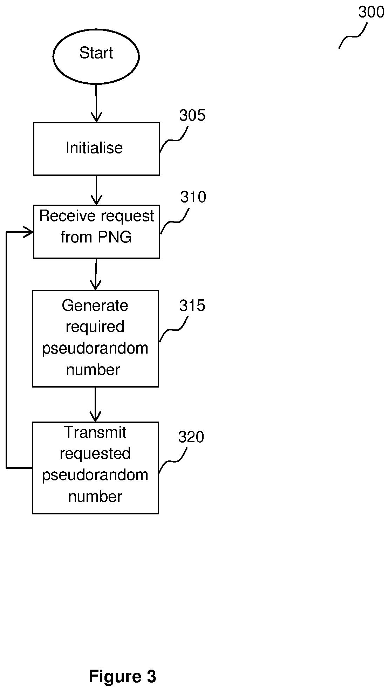

Figure 3 illustrates a process 300 performed by the PRNG module 130 to generating and transmitting pseudorandom number to the PNG module 140 in accordance with this disclosure.

Process 300 begins with step 305 where the PRNG 134 is initialised. The PRNG module 130 then receives a request from the PNG module 140 in step 310. The request contains the bit length of the pseudorandom number required.

In response to receiving the request, the PRNG module 130 generates, via the PRNG 134, the required bit length of pseudorandom number in step 315.

In step 320, the PRNG module 130 transmits the generated bit length of pseudorandom numbers to the PNG module 140. Steps 310-320 are repeated as and when the PRNG module 130 receives a request from the PNG module 140 and will repeat from step 305 when the PRNG 134 is being requested to be initialised.

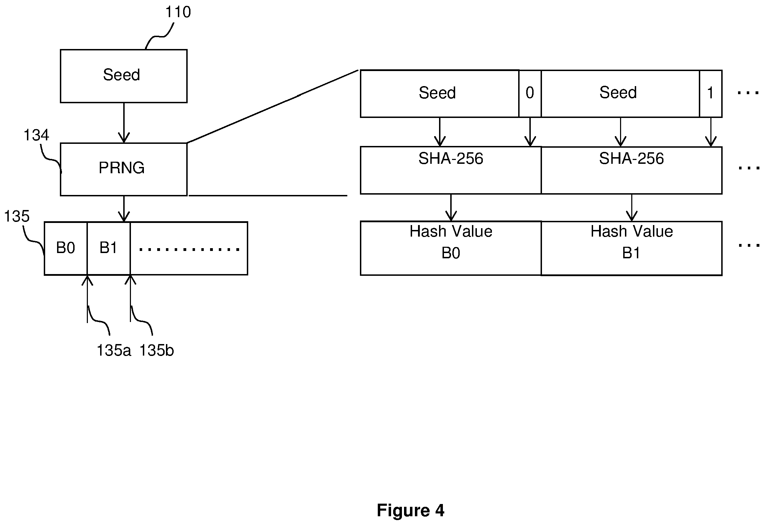

Essentially, the PRNG module 130 comprises a PRNG 134 for generating pseudorandom number. PRNG takes an input seed value (usually of fixed length) and output a pseudo-random bit stream of arbitrary length. The output pseudo-random bit stream will always be the same if the input seed value is used. Figure 4 illustrates an example of a PRNG 134 where the seed value 110 is based on the root key of 256 bits from a mobile device and a given bit length, i.e. Seed = (RK, bit length). The given bit length determines the bit length of the output of the PRNG 134.

With the seed value 110, the PRNG 134 generates pseudorandom number 135, B0, B1, B2, .... On the right of the PRNG 134 shows the expanded view of the PRNG 134 taking the seed value 110 and block-wise counter starting from zero and running through a hash function, SHA-256 to generate the pseudo-random stream, which is deterministic and can be of arbitrary length. The output of the PRNG 134 as illustrated in figure 4 can be expressed as follows, Bi = SHA-256(Seed,i). Assuming the bit length is 256-bit, the block size of each block of pseudorandom number 135 is 256-bit. If the bit length is 1-bit, the block size of each block of pseudorandom number 135 is 1-bit. The choice of the bit length is left to those skilled in the art.

The pointers 135a and 135b are to illustrate that assuming the bit length requested by the PNG module 140 is 256 bits, the PRNG module 130 would generate B0 with the pointer ending at 135a and B0 would be sent to the PNG module 140. If the next request from the PNG module 140 is 256 bits, the PRNG module 130 would generate B1 with the pointer ending at 135b and B1 would be sent to the PNG module 130. In another example, assuming the bit length requested by the PNG module 140 is 1000 bits, the PRNG module 130 would generate B0, B1, B2 and B3 with the pointer ending at the end of B3 and the first 1000 bits from B0-B3 would be sent to the PNG module 140 with the remaining 24 bits of data discarded. If the next request from the PNG module 140 is 500 bits, the PRNG module 130 would generate B4 and B5 with the pointer ending at the end of B5 and the first 500 bits from B4-B5 would be sent to the PNG module 140 with the remaining 12 bits of data discarded.

Briefly, the PRNG module 130 would generate blocks of pseudorandom number at least until the required bit length of pseudorandom number is available. The PRNG 134 would pause after generating the blocks of pseudorandom number and wait for the next request from the PNG module 140 while the PRNG module 130 transmits the required bit length of pseudorandom number to the PNG module 140.

One skilled in the art will recognise that other choices of PRNG may be implemented without departing from this disclosure. For example, NIST (National Institute of Standards and Technology of USA) has DRBG standards such as CTR_DRBG, HASH_DRBG and HMAC_DRBG, whose specification can be found in NIST Special Publication 800-90A.

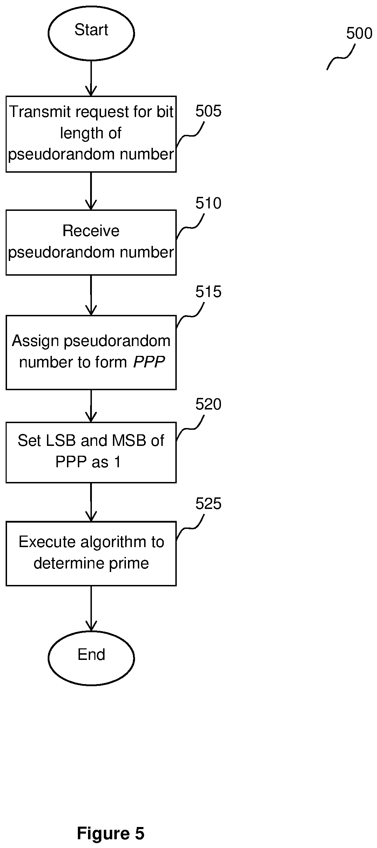

Figure 5 illustrates a process 500 performed by the PNG module 140 for determining a prime number in accordance with this disclosure. Process 500 begins with step 505 where the PNG module 140 transmits a request containing the bit length of the pseudorandom numbers required. For this illustration, we would be using 1024 bits for determining a prime number, since the RSA key pair uses 2048 bits, i.e. 1024 bits for each of P and Q.

In step 510, the PNG module 140 receives the bit length of 1024 bits of pseudorandom number from the PRNG module 130.

In response to receiving the pseudorandom number from the PRNG module 130, the PNG module 140 assigns the pseudorandom numbers to form raw data *PPP* which is 1024 bits in step 515.

In step 520, the PNG module 140 sets the least significant bit (LSB) and most significant bit (MSB) of *PPP* 1 and obtains a big odd number denoted as *PP*. The big odd number is for determining the big prime number, P.

In step 525, the PNG module 140 executes an algorithm to determine the first prime number starting from odd number *PP*. In short, the algorithm receives the odd number *PP* as an input and returns an output which is being assigned as the big prime number, P. Briefly, the algorithm comprises checking whether *PP* has small a prime factor. If *PP* has a small prime factor (e.g. $p_i|PP$), the algorithm repeats the check for the next prime, i.e. set *PP = Next(PP, step)*. The Next function (*PP = Next(PP, step)*) can be addition (*PP = PP + step*), XOR (*PP = PP ⊕ step*) and modular addition (*PP ≡ PP + step mod N*) etc. One skilled in the art will recognise that any other types of function may be chosen as the Next function, as long as we can repeatedly apply it to the value of PP to enumerate different possible values of PP.

If PP does not have a small prime factor, the algorithm runs Rabin-Miller primality test on PP with the random number (*a*). It is important to note that random number (*a*) is requested from the PRNG module 130. As mentioned above, the more iteration used in Rabin-Miller primality test increases the confidence in the primality of the output probabilistic prime number, but requires more computing power and time. Hence, there will be trade-offs between having a good primality and performance. If the PP does not pass Rabin-Miller primality test, the algorithm repeats from the check for the next prime, i.e. set PP = Next(PP, step). If the *PP* passes Rabin-Miller primality test, the algorithm determines the *PP* as the prime number P. Further details on the algorithm to determine the next prime number would be described below.

Process 500 illustrates the process of generating one big prime number. In order to determine two prime numbers for generating RSA key pair, process 500 may be repeated to determine the second prime number, Q. Alternatively, process 500 may be modified such that instead of requesting a bit length of pseudorandom number to form a big odd number PP in steps 505-520, process 500 may request for a bit length of pseudorandom number to form two big odd numbers PP and *QQ*. Thereafter, step 525 may be executed twice either sequentially or concurrently to determine two big prime numbers, *P* and Q.

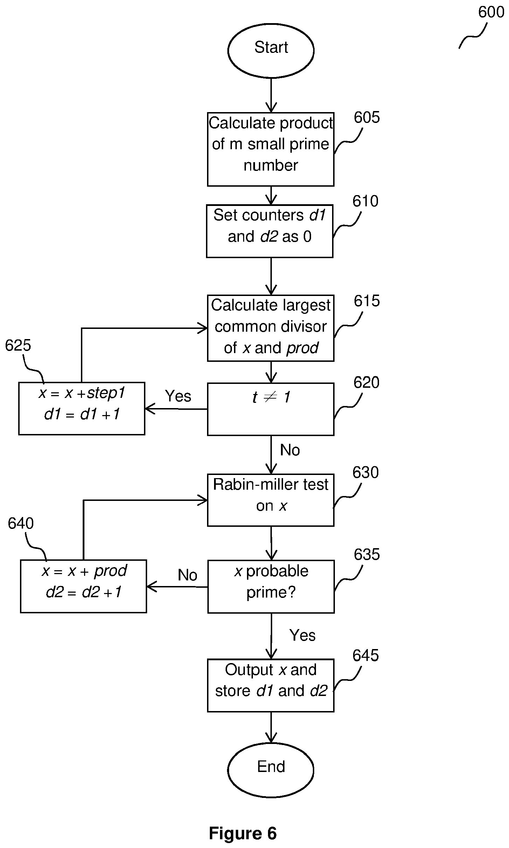

Figure 6 illustrates a first process 600 performed by the PNG module 140 executing a first algorithm to determine a prime number starting from odd number PP. Let *x* be the input value from step 525 of process 500, i.e. *x = PP*. Process 600 begins with step 605 by calculating the product of m number of small prime number, $prod = \prod_{i=0}^{m-1} p_i$, where $p_i$ is the *i*-th smallest prime number, i.e. 2. We choose the smallest prime numbers as $\{p_i\}_{0 \le i < m} = \{2,3,5,7,11,13 ...\}$. When we are deriving a 1024-bit prime number, the maximum value of m is 130. Since if m > 130, *prod* becomes more than 1024 bits, the filter of small prime factor no longer works. It means that we can filter at most 130 small prime factors using this technique.

In step 610, process 600 initialises two counters as zero, namely, *d1=0* and *d2=0*. Process 600 then calculates the greatest common divisor of *x* and *prod* in step 615 with the following function, *t = GCD(x,prod)*.

In step 620, if *t ≠ 1*, it means *t* is a factor of *x* (t|x) and *x* is not a prime number. Hence, process 600 proceeds to step 625. If *t = 1*, it means that *x* does not have factors of small primes any more: *GCD(x,prod) = 1*, which make it a good candidate for primality test. In short, if *t = 1*, *x* may be a prime number and process 600 proceeds to step 630.

In step 625, process 600 sets *x = x + step1* and *d1 = d1 + 1* and repeats from step 615. Preferably, *step1 = 2*. The next function (*x = x + step1*) can be replaced with XOR function (*x = x ⊕ step1*) or modular addition (*x ≡ x + step1 mod N*) etc.

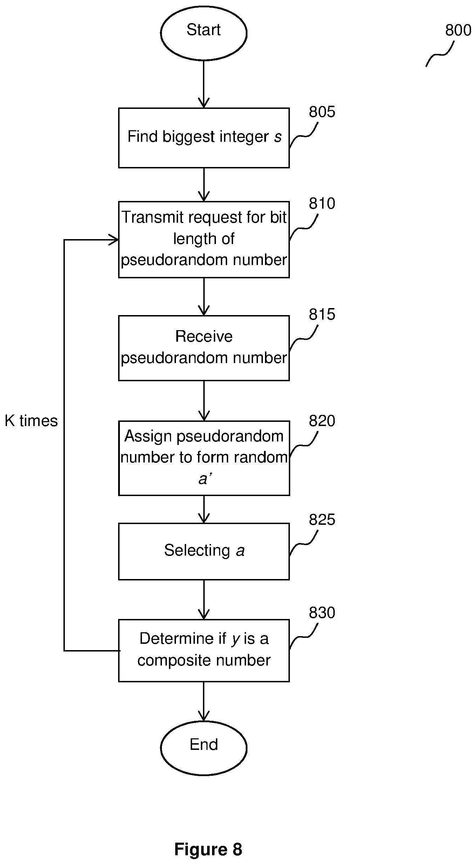

In step 630, process 600 runs Rabin-Miller primality test on *x*. Further details on the Rabin-Miller primality test would be described below with reference to figure 8.

In step 635, if the Rabin-Miller test fails on *x*, process 600 proceeds to step 640. If *x* passes the Rabin-Miller test, process 600 proceeds to step 645.

In step 640, process 600 updates *x = x + prod, and d2 = d2 + 1* and repeats from step 630. It is observed that *GCD(x + prod, prod) = GCD(x,prod) = 1*. The updated value of *x* doesn't have factor of small primes either, which makes it also a good candidate. If *x* pass the Rabin-Miller test, process 600 proceeds to step 645 and outputs the value *x* and stores *d1* and *d2* as offset values. The offset values *d1* and *d2* are stored on the memory for recovering the prime number.

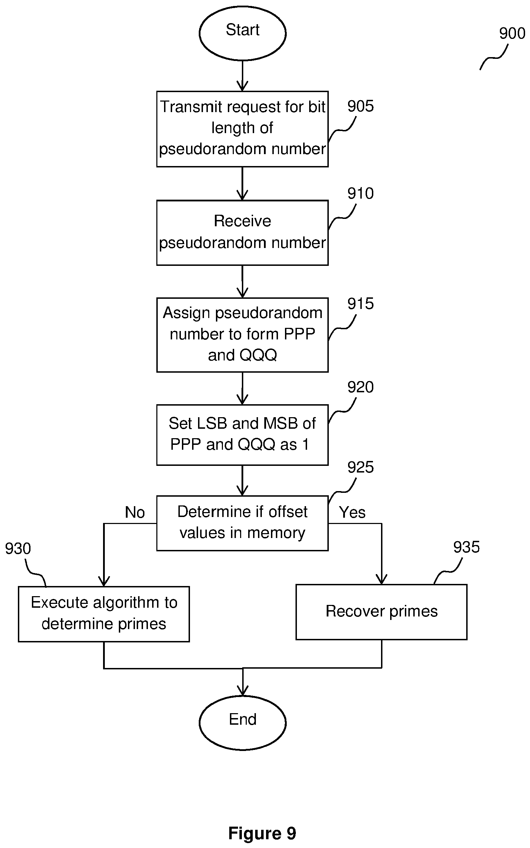

Process 600 may be repeated to determine another prime number, Q. Process 600 may be executed twice either sequentially or concurrently to determine both prime numbers, P and Q. Further details on generating two prime numbers would be described below with reference to figure 9.

In order to recover the 2 prime numbers, step 525 of process 500 is replaced with a recovery process. In short, in order to recover the two prime numbers, *P* and Q, the recovery process goes through steps 505-520 to obtain two big odd numbers *PP* and *QQ* and thereafter executes a recovery process where the PNG module 140 retrieves the offset values *d1, d2* of both $P\ (d_1^P\ and\ d_2^P)$ and $Q\ (d_1^Q\ and\ d_2^Q)$ from the memory and determines P and Q, with the following functions:

$$P = PP + \left(step1 \times d_1^P\right) + \left(prod \times d_2^P\right)$$

$$Q = QQ + \left(step1 \times d_1^Q\right) + \left(prod \times d_2^Q\right)$$

Where *step1* is 2; *prod* is the product of m number of small prime number, $prod = \prod_{i=0}^{m-1} p_i$ , where $p_i$ is the $i$-th smallest prime number, i.e. $p_0 = 2$, $p_1 = 3$, $p_2 = 5$, ....

As observed in the recovery process, the prime number P can be easily recovered by the following function, $P = PP + (2 \times d1) + (prod \cdot d2)$ without the time-consuming primality testing algorithm. Hence, recovery process runs much faster than the generation process.

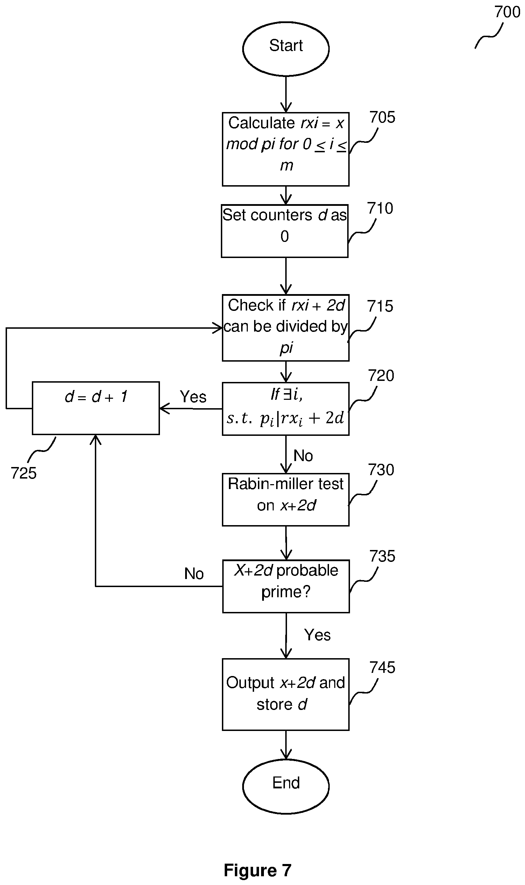

Figure 7 illustrates a second process 700 performed by the PNG module 140 executing a second algorithm to determine the first prime number starting from odd number $PP$. Let $x$ be the input value from step 525 of process 500, i.e. $x = PP$. Process 700 begins with step 705 by calculating $rx_i \equiv x \bmod p_i$ for $0 \le i < m$, where $p_i$ is the $i$-th smallest prime number and $rx_i$ is a single-precision word (usually 32-bit or 64-bit).

In step 710, process 700 sets counter d = 0.

In step 715, process check if $rx_i + 2d$ can be divided by any $p_i$ for $0 \le i < m$.

In step 720, if $\exists i, s.t.\ p_i | rx_i + 2d$, process 700 proceeds to step 730 and runs the Rabin-Miller primality test. In other words, if for all $i \in [0, m - 1]$, $rx_i + 2d$ cannot be divided by $p_i$, process 700 proceeds to step 730. Otherwise, process 700 proceeds to step 725 and sets $d = d + 1$. In step 720, if $p_i | rx_i + 2d$, we know that $x + 2d \equiv rx_i + 2d \equiv 0\ mod\ p_i$, $x + 2d$ is not prime. Checking if $p_i | rx + 2d$ only cost a single-precision remainder operation, which is much more efficient than remainder calculation on the big number $x + 2d$. This technique allows us to efficiently check m number of small prime factors.

After step 725, process 700 repeats from step 715.

In step 730, process 700 runs the Rabin-Miller primality test on $x + 2d$. Further details on the Rabin-Miller primality test would be described below with reference to figure 8.

In step 735, if $x + 2d$ does not pass Rabin-Miller test, process 700 proceeds to step 725. Otherwise, process 700 proceeds to step 745 and outputs $x + 2d$ a big prime number and stores d as offset value. The offset value d is stored on the memory for recovering the big prime number.

Process 700 may be repeated to determine another prime number, Q. Process 700 may be executed twice either sequentially or concurrently to determine both prime numbers, P and Q. Further details on generating two prime numbers would be described below with reference to figure 9.

In order to recover the 2 prime numbers, step 525 of process 500 is replaced with a recovery process. In short, in order to recover the two prime numbers, $P$ and Q, the recovery process goes through steps 505-520 to obtain two big odd numbers $PP$ and $QQ$ and thereafter execute a recovery step where the PNG module 140 retrieves the offset value d of both $P$ ($d^P$) and $Q$ ($d^Q$) from the memory and determines P and Q, with the following

functions:

$$P = PP + (2 \times d^P)$$

$$Q = QQ + (2 \times d^Q)$$

Figure 8 illustrates a process 800 performed by the PNG module 140 executing the Rabin-Miller primality test in step 630 of process 600 and step 730 of process 700. Let y be the odd number to be tested. In other words, $y = x$ in relation to step 630 in process 600 and $y = x + 2d$ in relation to step 730 in process 700. Process 800 begins with step 805 where the PNG module 140 determines the biggest integer s such that $y - 1 = 2^s \cdot v$, where $v$ is a positive odd integer.

In step 810, the PNG module 140 transmits a request containing the bit length of the pseudorandom numbers required. For purpose of this illustration, we would be using 1024 bits.

In step 815, the PNG module 140 receives the bit length of 1024 bits of pseudorandom number from the PRNG module 130.

In response to receiving the pseudorandom number from the PRNG module 130, the PNG module 140 assigns the pseudorandom numbers to form a first random number $a'$ in step 820.

In step 825, the PNG module 140 selects a second random number $a$ which is in a range of $[2, y - 2]$ with the following expression, $a = 2 + (a'\ mod\ (y - 3))$. One skilled in the art will recognise that other methods of selecting the second random number a may be implemented without departing from the disclosure.

In step 830, the PNG module 140 determines if y is a composite number. In particular, if $a^v \not\equiv 1\ mod\ y$ and $a^{2^r v} \not\equiv -1\ mod\ y$ for all $0 \le r \le s - 1$, y is a composite number and y is not a prime.

Steps 810-830 are repeated for K times with different random number $a$ and if no judgment that y is composite is given, y is output as a probabilistic prime number.

Rabin-Miller primality test is probabilistic, which means if y is prime, it will never be determined as composite; if y is composite, there is a small chance that it will be determined as prime number. As observed, by repeating the above test with different choices of random number $a$ in steps 810-825, the chance that a composite number be determined as prime will be decreased exponentially.

Figure 9 illustrates an overall process 900 for determining two prime numbers for generating a RSA key pairs from a given root key RK and bit length. Process 900 begins with step 905 where the PNG module 140 transmits a request containing the bit length of the pseudorandom numbers required. For this illustration, we would be using 2048 bits for determining two prime numbers, since the RSA key pair uses 2048 bits, i.e. 1024 bits for each of P and Q.

In step 910, the PNG module 140 receives the bit length of 2048 bits of pseudorandom number from the PRNG module 130.

In response to receiving the pseudorandom number from the PRNG module 130, the PNG module 140 assigns the first 1024 bits of pseudorandom numbers to form a first raw data *PPP* and the subsequent 1024 bits of pseudorandom numbers to form a second raw data *QQQ*.

In step 920, the PNG module 140 sets the least significant bit (LSB) and most significant bit (MSB) of *PPP* and *QQQ* as 1 and obtains a first big odd number denoted as *PP* and a second big odd number denoted as *QQ*. The first big odd number is for determining the first big prime number, P while the second big odd number is for determining the second big prime number, Q.

In step 925, the PNG module 140 determines whether the offset values are stored in the memory. If the offset values are stored on the memory, process 900 proceeds to step 935 to recover the prime numbers based on the offset values. If the offset values are not stored on the memory, process 900 proceeds to step 930 to execute the algorithm to determine the prime numbers.

In step 930, the PNG module 14 executes the algorithm to determine the prime numbers according to either process 600 or process 700. In this regard, either process 600 or process 700 is selected to determine the two prime numbers. Alternatively, it is also possible to execute process 600 to determine the first prime number and process 700 to determine the second prime number, and vice versa, without departing from the disclosure.

In step 935, the recovery process is dependent on the selection of process 600 or process 700 for generating the prime numbers, *P* and *Q*.

The two prime numbers, P and Q are then used for generating the RSA key pairs. The details of generating the RSA key pairs are well known and have been described above in the summary of prior art.

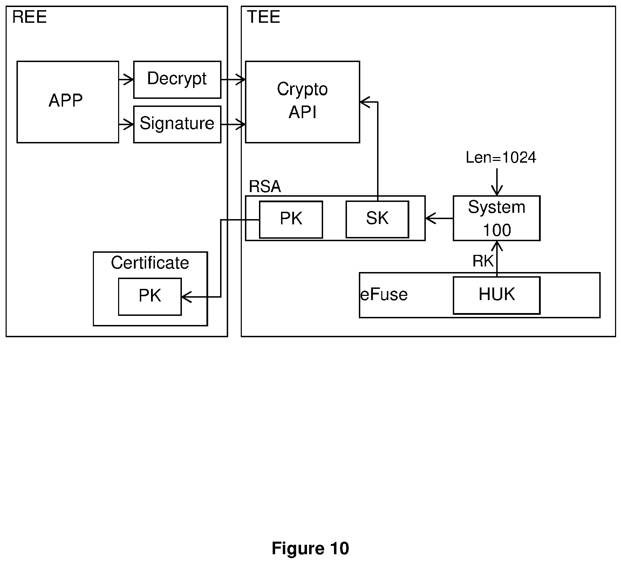

Figure 10 illustrates an example of an application of this disclosure. The processes performed by the system 100 is used to generate and recover device RSA key pairs using the device hardware unique key HUK as the seed value. This only requires to store 256-bit root key, instead of 2048-bit RSA key pairs. Root Key is typically stored in One Time Programmable (OTP) memory using eFuse technology. This kind of memory is typically very limited and expensive, therefore it is not reasonable to store directly large data such as RSA key into OTP memory. In other words, system 100 is used instead of storing 2048-bit RSA key pairs. Further, as the processes performed by the system 100 is software implemented, older version of devices which only have symmetric device key can also benefit from this as it is only required to upgrade the software of the devices.

It is also possible to obtain unique RSA key pair by replacing RK with the following function, f(RK, seed), where f is one-way key derivation function (KDF). For example f is KDF1-SHA256. This allows us to support derivation of multiple keys.

Beneficially, prime generation needs to be done only once and later, much faster recovery is needed. Since the system 100 uses PRNG 134, the two prime numbers are be reproduced.

The system 100 is also applicable in resource constrained devices such as sensors and other IoT devices, because they can use pre-computed offset values for prime recovery.

The above is a description of embodiments of the method according to claim 3 and the system according to claim 1 of implementing a deterministic derivation function to obtain two large prime numbers in order to generate a pair of keys. It is foreseeable that those skilled in the art can and will design alternative method and system based on this disclosure that infringe upon this invention as set forth in the following claims.

**Claims**

1. A system for generating a prime number comprising:

    a pseudorandom number generator (PRNG) module (130) and a prime number generator (PNG) module (140),
    wherein the PNG module (140) is configured to:

        obtain a pseudorandom number from the PRNG module (130);
        determine a big odd number denoted as PP according to the pseudorandom number, wherein a bit-size of PP is 1024 bit;
        execute primality test on PP; and
        determine PP as the output prime number in response to PP passing the primality test;

    wherein the determined PP is used to generate RSA key pair; wherein the PRNG module (130) comprises a PRNG to generate the required bit length of pseudorandom number, the PRNG takes an input seed value from a root key from a source and a given bit length, wherein a device hardware unique key is the seed value, and wherein the system is software implemented, and wherein the PNG module (140) is further configured to:

        run filter function on PP to check if it has any small prime factor;
        the step of executing primality test on PP comprising:

            execute Rabin-Miller primality test on *PP* in response to PP has no small prime factor, wherein the PRNG module (130) is configured to:

receive a request from the PNG module (140), the request containing a bit length of the pseudorandom number required;
generate the required bit length of pseudorandom number; and
transmit a response containing the generated bit length of pseudorandom numbers to the PNG module (140).

2. The system according to claim 1 wherein the step performed by the PNG module (140) of executing primality test on *PP* in response to PP has no small prime factor comprises:

determining the biggest integer s such that PP - 1 = $2^s \cdot v$, where *v* is a positive odd integer;
obtaining another pseudorandom number from the PRNG module (130);
selecting a pseudorandom number *a* within a range of 2 and PP - 2 according to the another pseudorandom number; and
determining PP is a composite number if $a^v \not\equiv 1 \bmod PP$ and $a^{2^r v} \not\equiv -1 \bmod PP$ for all $0 \leq r \leq s - 1$.

3. A method for generating a prime number between a pseudorandom number generator, PRNG, module and a prime number generator, PNG, module, comprising:

obtaining a pseudorandom number;
determining a big odd number denoted as PP according to the pseudorandom number wherein a bit-size of PP is 1024 bit;
executing primality test on PP; and
determining PP as the output prime number in response to PP passing the primality test;

wherein the determined PP is used to generate RSA key pair;

wherein a required bit length of pseudorandom number is generated by a seed value from a root key from a source and a given bit length,
wherein a device hardware unique key is the seed value, and
wherein the method is software implemented, and wherein the method further comprises:

run filter function on PP to check if it has any small prime factor;
the step of executing primality test on PP comprising:
execute Rabin-Miller primality test on *PP* in response to PP has no small prime factor,

the method further comprises
receiving a request from the PNG module, the request containing a bit length of the pseudorandom number required;
generating the required bit length of pseudorandom number;
transmitting a response containing the generated bit length of pseudorandom numbers to the PNG module.

4. The method according to claim 3 wherein the step of executing primality test on PP in response to PP has no small prime factor comprising:

determining the biggest integer s such that PP - 1 = $2^s \cdot v$, where *v* is a positive odd integer;
obtaining another pseudorandom number;
selecting a pseudorandom number *a* within a range of 2 and PP - 2 according to the another pseudorandom number; and
determining PP is a composite number if $a^v \not\equiv 1 \bmod PP$ and $a^{2^r v} \not\equiv -1 \bmod PP$ for all $0 \leq r \leq s - 1$.

5. The method according to claim 3, wherein the root key is obtained from a device hardware unique key and the given bit length is 1024 bits.

## Patentansprüche

1. System zum Erzeugen einer Primzahl, das Folgendes umfasst:

ein Pseudozufallszahlengenerator (PRNG)-Modul (130) und ein Primzahlengenerator (PNG)-Modul (140),
wobei das PNG-Modul (140) konfiguriert ist zum:

Erhalten einer Pseudozufallszahl von dem PRNG-Modul (130);
Bestimmen einer großen ungeraden Zahl, die gemäß der Pseudozufallszahl als PP bezeichnet wird,
wobei eine Bitgröße von PP 1024 Bit beträgt;
Ausführen eines Primzahltests an *PP*; und
Bestimmen von *PP* als Ausgabeprimzahl, wenn *PP* den Primzahltest besteht;
wobei die bestimmte PP verwendet wird, um ein RSA-Schlüsselpaar zu erzeugen;
wobei das PRNG-Modul (130) einen PRNG umfasst, um die erforderliche Bitlänge der Pseudozufallszahl zu erzeugen, wobei der PRNG einen Eingabe-Seed-Wert von einem Root-Schlüssel von einer Quelle und einer gegebenen Bitlänge heranzieht, wobei ein eindeutiger Hardware-Schlüssel der Vorrichtung der Seed-Wert ist, und wobei das System softwareimplementiert ist, und wobei das PNG-Modul (140) ferner konfiguriert ist zum:

Ausführen der Filterfunktion an PP, um zu prüfen, ob sie einen kleinen Primfaktor aufweist;
wobei der Schritt des Ausführens des Primzahltests an PP umfasst:

Ausführen des Rabin-Miller-Primzahltests an PP als Antwort darauf, dass PP keinen kleinen Primfaktor aufweist,
wobei das PRNG-Modul (130) konfiguriert ist zum:

Empfangen einer Anforderung vom PNG-Modul (140), wobei die Anforderung eine Bitlänge der benötigten Pseudozufallszahl enthält;
Erzeugen der erforderlichen Bitlänge der Pseudozufallszahl; und
Übertragen einer Antwort mit der erzeugten Bitlänge der Pseudozufallszahlen an das PNG-Modul (140).

2.  System nach Anspruch 1, wobei der vom PNG-Modul (140) durchgeführte Schritt des Ausführens eines Primzahltests an *PP* als Antwort darauf, dass *PP* keinen kleinen Primfaktor aufweist, umfasst:

Bestimmen der größten ganzen Zahl s derart, dass $PP - 1 = 2^s \cdot v$, wobei *v* eine positive ungerade ganze Zahl ist;
Erhalten einer weiteren Pseudozufallszahl von dem PRNG-Modul (130) ;
Auswählen einer Pseudozufallszahl a innerhalb eines Bereichs von 2 und *PP* - 2 gemäß der weiteren Pseudozufallszahl; und Bestimmen, dass *PP* eine zusammengesetzte Zahl ist, wenn $a^v \not\equiv 1 \ mod \ PP$ und $a^{2^r v} \not\equiv -1 \ mod \ PP$ für alle $0 \leq r \leq s - 1$.

3.  Verfahren zum Erzeugen einer Primzahl zwischen einem Pseudozufallszahlengenerator, PRNG, Modul und einem Primzahlgenerator, PNG, Modul, umfassend:

Erhalten einer Pseudozufallszahl;
Bestimmen einer großen ungeraden Zahl, die gemäß der Pseudozufallszahl als PP bezeichnet wird, wobei eine Bitgröße von PP 1024 Bit beträgt;
Ausführen eines Primzahltests an *PP*; und
Bestimmen von *PP* als Ausgabeprimzahl, wenn *PP* den Primzahltest besteht;
wobei die bestimmte PP verwendet wird, um ein RSA-Schlüsselpaar zu erzeugen;
wobei eine erforderliche Bitlänge der Pseudozufallszahl durch einen Seed-Wert aus einem Wurzelschlüssel von einer Quelle und einer gegebenen Bitlänge erzeugt wird,
wobei ein eindeutiger Hardware-Schlüssel der Vorrichtung der Seed-Wert ist, und
wobei das Verfahren softwareimplementiert ist, und wobei das Verfahren ferner umfasst:

Ausführen der Filterfunktion an PP, um zu prüfen, ob sie einen kleinen Primfaktor aufweist;
wobei der Schritt des Ausführens des Primzahltests auf *PP* umfasst:

Ausführen des Rabin-Miller-Primzahltests an *PP* als Antwort darauf, dass *PP* keinen kleinen Primfaktor aufweist, wobei das Verfahren ferner umfasst:

Empfangen einer Anforderung vom PNG-Modul, wobei die Anforderung eine Bitlänge der benötigten Pseudozufallszahl enthält;
Erzeugen der erforderlichen Bitlänge der Pseudozufallszahl;
Übertragen einer Antwort, die die erzeugte Bitlänge von Pseudozufallszahlen enthält, an das PNG-Modul.

4.  Verfahren nach Anspruch 3, wobei der Schritt des Ausführens eines Primzahltests an *PP* als Antwort darauf, dass *PP* keinen kleinen Primfaktor aufweist, umfasst:

Bestimmen der größten ganzen Zahl s derart, dass $PP - 1 = 2^s \cdot v$, wobei *v* eine positive ungerade ganze Zahl ist;
Erhalten einer weiteren Pseudozufallszahl;
Auswählen einer Pseudozufallszahl a innerhalb eines Bereichs von 2 und *PP* - 2 gemäß der weiteren Pseudozufallszahl; und
Bestimmen, dass *PP* eine zusammengesetzte Zahl ist, wenn $a^v \not\equiv 1 \ mod \ PP$ und $a^{2^r v} \not\equiv -1 \ mod \ PP$ für alle $0 \leq r \leq s - 1$.

5.  Verfahren nach Anspruch 3, wobei der Root-Schlüssel von einem eindeutigen Hardware-Schlüssel der Vorrichtung erhalten wird und die vorgegebene Bitlänge 1024 Bit beträgt.

**Revendications**

1. Système de génération d'un nombre premier comprenant :

   un module générateur de nombres pseudo-aléatoires (PRNG) (130) et un module générateur de nombres premiers (PNG) (140), dans lequel le module PNG (140) est configuré pour :

   obtenir un nombre pseudo-aléatoire du module PRNG (130) ; déterminer un grand nombre impair noté PP en fonction du nombre pseudo-aléatoire, dans lequel une taille de bit de PP est de 1 024 bits ; exécuter un test de primalité sur PP ; et déterminer PP comme nombre premier de sortie en réponse à la réussite de PP au test de primalité ; dans lequel le PP déterminé est utilisé pour générer une paire de clés RSA ; dans lequel le module PRNG (130) comprend un PRNG pour générer la longueur de bit requise du nombre pseudo-aléatoire, le PRNG prend une valeur de départ d'entrée à partir d'une clé racine provenant d'une source et d'une longueur de bit donnée, dans lequel une clé matérielle unique de dispositif est la valeur de départ, et dans lequel le système est mis en œuvre par logiciel, et dans lequel le module PNG (140) est en outre configuré pour :

   exécuter une fonction de filtrage sur PP pour vérifier s'il a un petit facteur premier ; l'étape d'exécution d'un test de primalité sur PP comprenant :

   l'exécution du test de primalité de Rabin-Miller sur PP en réponse à PP n'ayant pas de petit facteur premier, dans lequel le module PRNG (130) est configuré pour :

   recevoir une demande du module PNG (140), la demande contenant une longueur de bit du nombre pseudo-aléatoire requise ; générer la longueur de bit requise du nombre pseudo-aléatoire ; et transmettre une réponse contenant la longueur de bit générée des nombres pseudo-aléatoires au module PNG (140).

2. Système selon la revendication 1, dans lequel l'étape exécutée par le module PNG (140) d'exécution de test de primalité sur PP en réponse à *PP* n'ayant pas de petit facteur premier comprend :

   la détermination du plus grand entier s tel que $PP - 1 = 2^s \cdot v$, où *v* est un entier impair positif ; l'obtention d'un autre nombre pseudo-aléatoire du module PRNG (130) ; la sélection d'un nombre pseudo-aléatoire a dans une plage de 2 et *PP* - 2 en fonction de l'autre nombre pseudo-aléatoire ; et la détermination de *PP* est un nombre composé si $a^v \not\equiv 1 \bmod PP$ et $a^{2^r v} \not\equiv -1 \bmod PP$ pour tous $0 \leq r \leq s - 1$.

3. Procédé de génération d'un nombre premier entre un module générateur de nombres pseudo-aléatoires, PRNG, et un module générateur de nombres premiers, PNG, comprenant :

   l'obtention d'un nombre pseudo-aléatoire ; la détermination d'un grand nombre impair désigné par PP en fonction du nombre pseudo-aléatoire dans lequel une taille de bit de PP est de 1 024 bits ; l'exécution d'un test de primalité sur PP ; et la détermination de PP comme nombre premier de sortie en réponse à la réussite de PP au test de primalité ; dans lequel le PP déterminé est utilisé pour générer une paire de clés RSA ; dans lequel une longueur de bit requise d'un nombre pseudo-aléatoire est générée par une valeur de départ à partir d'une clé racine provenant d'une source et d'une longueur de bit donnée, dans lequel une clé matérielle unique de dispositif est la valeur de départ, et dans lequel le procédé est mis en œuvre par logiciel, et dans lequel le procédé comprend en outre :

   l'exécution d'une fonction de filtrage sur PP pour vérifier s'il a un petit facteur premier ; l'étape d'exécution d'un test de primalité sur PP comprenant :

   l'exécution du test de primalité de Rabin-Miller sur PP en réponse à *PP* n'ayant pas de petit facteur premier, le procédé comprend en outre la réception d'une demande du module PNG, la demande contenant une longueur de bit du nombre pseudo-aléatoire requise ;

la génération de la longueur de bit requise du nombre pseudo-aléatoire ;

la transmission d'une réponse contenant la longueur de bit générée des nombres pseudo-aléatoires au module PNG.

4. Procédé selon la revendication 3, dans lequel l'étape d'exécution du test de primalité sur *PP* en réponse à *PP* n'ayant pas de petit facteur premier comprenant :

la détermination du plus grand entier s tel que *PP* - 1 = $2^s \cdot v$, où *v* est un entier impair positif ;
l'obtention d'un autre nombre pseudo-aléatoire ;
la sélection d'un nombre pseudo-aléatoire a dans une plage de 2 et *PP* - 2 en fonction de l'autre nombre pseudo-aléatoire ; et
la détermination de *PP* est un nombre composé si $a^v \not\equiv 1 \ mod \ PP$ et $a^{2rv} \not\equiv -1 \ mod \ PP$ pour tous $0 \leq r \leq s - 1$.

5. Procédé selon la revendication 3, dans lequel la clé racine est obtenue à partir d'une clé matérielle unique de dispositif et la longueur de bit donnée est de 1 024 bits.

100

130

140

| Pseudorandom number generator | Prime number generator |

**Figure 1**

**Figure 2**

300

```
        ┌─────────┐
        │  Start  │
        └─────────┘
             │
             ▼
      ┌──────────────┐   305
      │  Initialise  │
      └──────────────┘
             │
             ▼
      ┌──────────────┐   310
   ┌─→│Receive request│
   │  │   from PNG   │
   │  └──────────────┘
   │          │
   │          ▼
   │  ┌──────────────┐   315
   │  │   Generate   │
   │  │   required   │
   │  │ pseudorandom │
   │  │    number    │
   │  └──────────────┘
   │          │
   │          ▼
   │  ┌──────────────┐   320
   │  │   Transmit   │
   └──│  requested   │
      │ pseudorandom │
      │    number    │
      └──────────────┘
```

**Figure 3**

Figure 4

**Figure 5**

600

```
        ┌─────────┐
        │  Start  │
        └─────────┘
             │
             ▼
  ┌──────────────────────┐    605
  │ Calculate product    │
  │ of m small prime     │
  │ number               │
  └──────────────────────┘
             │
             ▼
  ┌──────────────────────┐    610
  │ Set counters d1      │
  │ and d2 as 0          │
  └──────────────────────┘
             │
             ▼
  ┌──────────────────────┐    615
  │ Calculate largest    │
  │ common divisor       │
  │ of x and prod        │
  └──────────────────────┘
             │
             ▼
┌──────────────┐  Yes  ┌──────────────┐   620
│ x = x +step1 │◄──────│   t ≠ 1      │
│ d1 = d1 +1   │       └──────────────┘
└──────────────┘            │ No
   625                      ▼
                   ┌──────────────────┐   630
                   │ Rabin-miller test│
                   │ on x             │
                   └──────────────────┘
                            │
                            ▼
┌──────────────┐  No   ┌──────────────┐   635
│ x = x + prod │◄──────│  x probable  │
│ d2 = d2 +1   │       │   prime?     │
└──────────────┘       └──────────────┘
   640                      │ Yes
                            ▼
                   ┌──────────────────┐   645
                   │ Output x and     │
                   │ store d1 and d2  │
                   └──────────────────┘
                            │
                            ▼
                       ┌─────────┐
                       │   End   │
                       └─────────┘
```

**Figure 6**

700

Start

Calculate *rxi = x mod pi for 0 ≤ i ≤ m*  705

Set counters *d* as 0  710

Check if *rxi + 2d* can be divided by *pi*  715

*If ∃i, s.t. $p_i | r x_i + 2d$*  720

*d = d + 1*  725

Yes

No

Rabin-miller test on *x+2d*  730

*X+2d* probable prime?  735

No

Yes

Output *x+2d* and store *d*  745

End

**Figure 7**

Figure 8

**Figure 9**

**Figure 10**

## REFERENCES CITED IN THE DESCRIPTION

**Patent documents cited in the description**

- WO 2015132524 A2

- US 2002186837 A1

**Non-patent literature cited in the description**

- Generating Provable Prime Efficiently on Embedded Devices. **CHRISTOPHE CLAVIER et al.** NETWORK AND PARALLEL COMPUTING. SPRINGER INTERNATIONAL PUBLISHING, 372-389